# EUROPEAN PATENT APPLICATION

(11) **EP 0 909 905 A1**
(43) Date of publication of application: **21.04.1999**
(21) Application number: 98119542.3
(22) Date of filing: 15.10.1998
(51) Int. Cl.: F16F 9/54, F16C 11/06, B60G 13/00

(54) **Structure for supporting pivot controlling damper**

(30) Priority: 16.10.1997 JP 284014/97
(71) Applicant: Kabushiki Kaisha Toyoda Jidoshokki Seisakusho, Aichi-ken 448-8671 (JP)
(72) Inventor: Ishikawa, Kazuo, Kariya-shi, Aichi-ken (JP); Takeuchi, Toshiyuki, Kariya-shi, Aichi-ken (JP)
(74) Representative: Pellmann, Hans-Bernd, Dipl.-Ing.

(57) **Abstract**

A structure for supporting a damper of an industrial vehicle. The damper (6) is supported by a multi-directional pivot joint (26, 21) such that excessive force is not applied to the joint (26, 21). The pivoting amount of the damper (6) about its longitudinal axis is restricted. The supporting structure includes a connecting pin (20) and a bearing (26). The connecting pin (20) is supported by a bracket (12), which is fixed to a body frame (2). The damper (6) includes a coupler (22), which houses the pivot joint (26, 21). A stopper (28) is provided on the outer surface of one side of the coupler (22) to restrict the pivoting amount of damper (6). The stopper (28) extends in the axial direction of the coupler (22) and is formed integrally with the coupler (22).

## Description

### TECHNICAL FIELD

The present invention relates to a structure for supporting dampers, which control pivoting of an axle with respect to a body frame in industrial vehicles such as forklifts.

### RELATED BACKGROUND ART

A typical industrial vehicle, such as a forklift, has an axle that is supported pivotally with respect to a vehicle frame, or body frame. The pivotal axle enhances the forklift's driving performance and riding comfort. However, if pivoting of the axle becomes excessive, the vehicle may become unstable, especially if the forklift carries a heavy object, lifts an object to a high position, or turns at high speeds. To prevent such excessive pivoting, a damper, which temporarily restricts pivoting of the axle relative to the body frame under such conditions, is installed between the body frame and the axle.

A typical structure for supporting the damper includes a bracket fixed to the frame and a further bracket fixed to the axle. Each bracket supports a connecting pin, which extends in the longitudinal direction of the vehicle. A bearing is defined on each end of the damper to receive the associated connecting pin. Accordingly, the damper is supported pivotally about each connecting pin.

During production of the forklift, the axle is assembled as a unit before being coupled to the body frame. Therefore, the relative positions of the body frame and the axle when coupled to each other may be offset from the ideal positions in the longitudinal direction of the vehicle due to dimensional differences between components or dimensional tolerances that are permitted during assembly. In such case, excessive force is applied to the connecting pins and the damper bearings.

To solve this problem, the present applicant has proposed a damper supporting structure that employs a multi-directional, ball-and-socket-type pivot joint. The mult-directional pivot joint permits multi-directional pivoting between an end of the damper and its bracket which prevents the application of excessive force on the connecting pins and bearings.

The present applicant has also proposed a damper that employs a pivot control device, such as an electromagnetic valve, assembled integrally with and projecting laterally from the damper. Accordingly, components for supporting the electromagnetic valve can be eliminated. The simplified structure also decreases the number of assembly steps.

The multi-directional pivot joint, which permits pivoting of the damper with respect to the brackets about multiple axes, may be employed in a damper having a pivot control device projecting laterally. However, pivoting of the damper about its axis may result in the pivot control device hitting other components.

In addition, the multi-directional pivot joint, which requires a rounded sliding surface, is complicated. This increases costs related to the installation of the damper.

### DISCLOSURE OF THE INVENTION

Accordingly, it is an objective of the present invention to provide a damper supporting structure that permits multi-directional pivoting of the damper relative to an axle or a body frame and prevents the application of excessive force, while restricting pivoting of the damper about its axis.

To achieve the above objective, the present invention provides a supporting structure of a damper used in an apparatus for controlling the stability of a vehicle. The damper has a longitudinal axis and is located between a vehicle frame and an axle. The axle is supported to pivot in a vertical direction relative to the vehicle frame. The damper has a control mechanism projecting from a side surface of the damper for controlling pivoting of the axle. The structure includes a bracket attached to one of the axle and the vehicle frame. A connecting pin is connected with the bracket to extend in a longitudinal direction of the vehicle. The connecting pin has a supporting portion provided with an outer bearing surface. A coupler is located at an end of the damper. The coupler has an inner bearing surface for contacting the outer bearing surface. The inner bearing surface and the outer bearing surface form a multi-directional pivot joint. A projection is associated with one side of the coupler for restricting pivotal movement of the damper about its longitudinal axis.

Other aspects and advantages of the present invention will become apparent from the following description, taken in conjunction with the accompanying drawings, illustrating by way of example the principles of the invention.

### BRIEF DESCRIPTION OF THE DRAWINGS

The features of the present invention that are believed to be novel are set forth with particularity in the appended claims. The invention, together with objects and advantages thereof, may best be understood by reference to the following description of the presently preferred embodiments together with the accompanying drawings in which:
Fig. 1 is a schematic cross-sectional view showing a first embodiment of a damper supporting structure according to the present invention;
Fig. 2 is a diagrammatic view showing a mechanism for restricting pivoting of the rear axle;
Fig. 3 is a rear view showing a damper;
Fig. 4 is a partial side view showing the damper of Fig. 1 without a support plate and a coupling pin;
Fig. 5 is a partial cross-sectional view taken along line 5-5 in Fig. 3;
Fig. 6 is a partial cross-sectional view taken along line 6-6 in Fig. 5;
Fig. 7 is a partial cross-sectional view showing a coupler pivoted from the state of Fig. 5;
Fig. 8 is a partial cross-sectional view showing the coupler pivoted from the state of Fig. 6;
Fig. 9 is a cross-sectional view corresponding to Fig. 6 and showing a coupler in a further embodiment of a damper supporting structure according to the present invention; and
Fig. 10 is a cross-sectional view corresponding to Fig. 6 and showing a coupler in a further embodiment of a damper supporting structure according to the present invention.

### DESCRIPTION OF SPECIAL EMBODIMENT

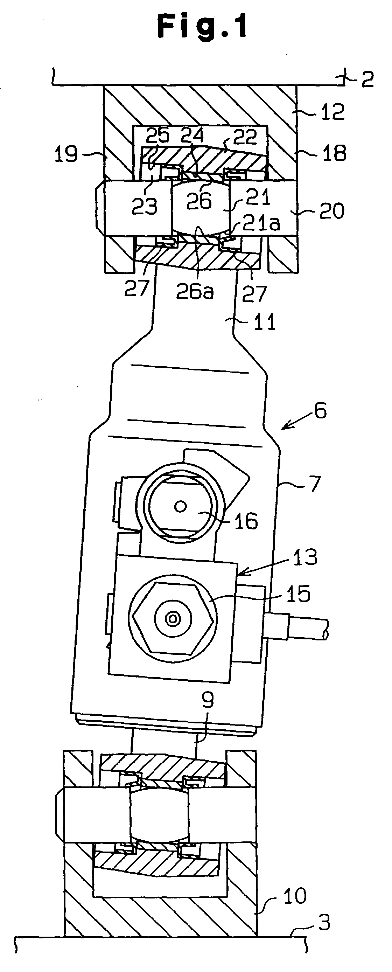

A first embodiment of a damper supporting structure according to the present invention will now be described with reference to Figs. 1 to 8. The present invention is applied to a forklift 1.

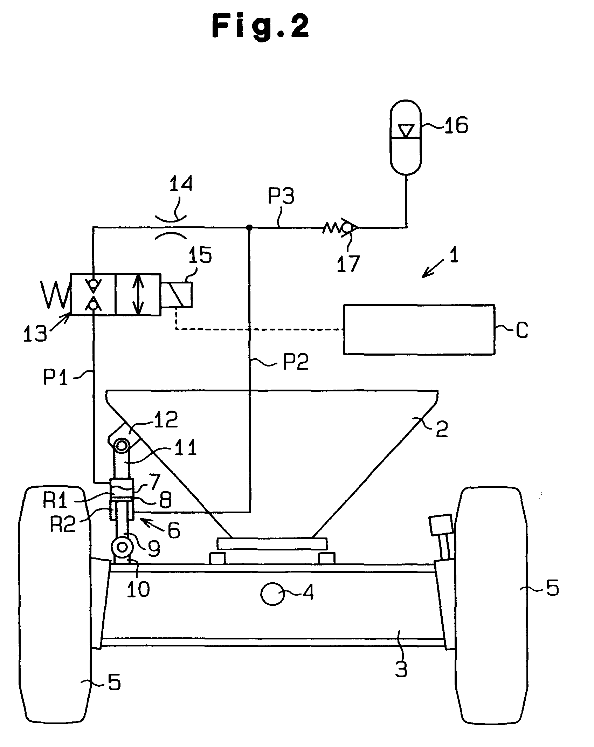

As shown in Fig. 2, the forklift 1 has a vehicle frame, or body frame 2. A rear axle 3 extends laterally below the rear portion of the body frame 2. The rear axle 3 pivots about a center pin 4 with respect to the body frame 2. A rear wheel 5, which steers the forklift 1, is mounted on each end of the rear axle 3.

A damper 6 is arranged between the body frame 2 and the rear axle 3 to control tilting of the forklift 1, or pivoting of the rear axle 3 relative to the body frame 2. A dual-action type hydraulic cylinder is employed in the preferred embodiment. The damper 6 includes a cylinder 7 and a piston 8, which is housed in the cylinder 7. The piston 6 defines a first chamber R1 and a second chamber R2 in the cylinder 7. The piston 8 is connected with a piston rod 9, which is further connected with a bracket 10. The bracket 10 is fixed to the rear axle 3. An anchor 11 extends from the upper portion of the cylinder 7. The upper portion of the anchor 11 is connected with a bracket 12, which is fixed to the body frame 2. When the rear axle 3 pivots about the center pin 4 and thus tilts the body frame 2 with respect to the rear axle 3, the piston rod 9 projects from or retracts into the cylinder 7. This causes the piston 8 to move hydraulic oil out of or into the first and second chambers R1, R2.

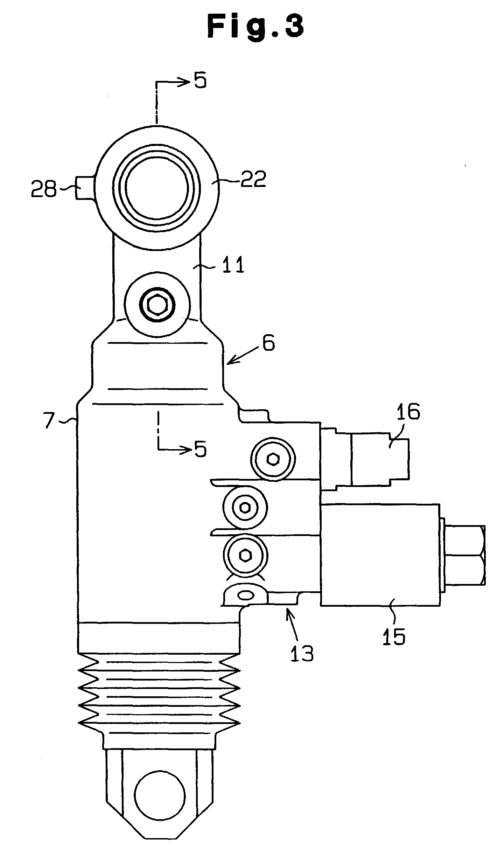

In the hydraulic circuit of Fig. 2, devices for controlling the damper 6 are illustrated outside the damper 6 to facilitate understanding of the flow of hydraulic oil. However, such control devices are actually assembled integrally with the damper housing 7 as shown in Fig. 3.

The first chamber R1 is connected to an electromagnetic control valve 13, which serves as part of a damper controller, by way of a first passage P1. The second chamber R2 is connected to the control valve 13 by way of a second passage P2. As shown in Fig. 3, the control valve 13 projects from the peripheral wall of the cylinder 7. A throttle valve 14 is arranged in the second passage P2. The control valve 13 has an electromagnetic solenoid 15, which is excited or de-excited to control the damper 6. Excitation and de-excitation of the solenoid 15 is controlled by a controller C, which is connected to the solenoid 15.

The second passage P2 is connected to an accumulator 16, which serves as part of the damper controller, by a third passage P3. As shown in Fig. 3, the accumulator 16 is located on the upper portion of the control valve 13. A check valve 17 is arranged in the third passage P3. The accumulator 16 supplies the first and second chambers R1, R2 with hydraulic oil such that the hydraulic pressure therein is maintained above a predetermined value. The check valve 17 prevents the hydraulic oil in the third passage P3 from flowing into the accumulator 16.

As shown in Fig. 1, the bracket 12 fixed to the body frame 2 has a pair of supporting pieces, or support plates 18, 19 for supporting a connecting pin 20, which extends in the longitudinal direction of the vehicle. A support portion 21 having a rounded outer bearing surface 21a is defined at the midsection of the connecting pin 20. The outer bearing surface 21a is lubricated by a lubricating device (not shown).

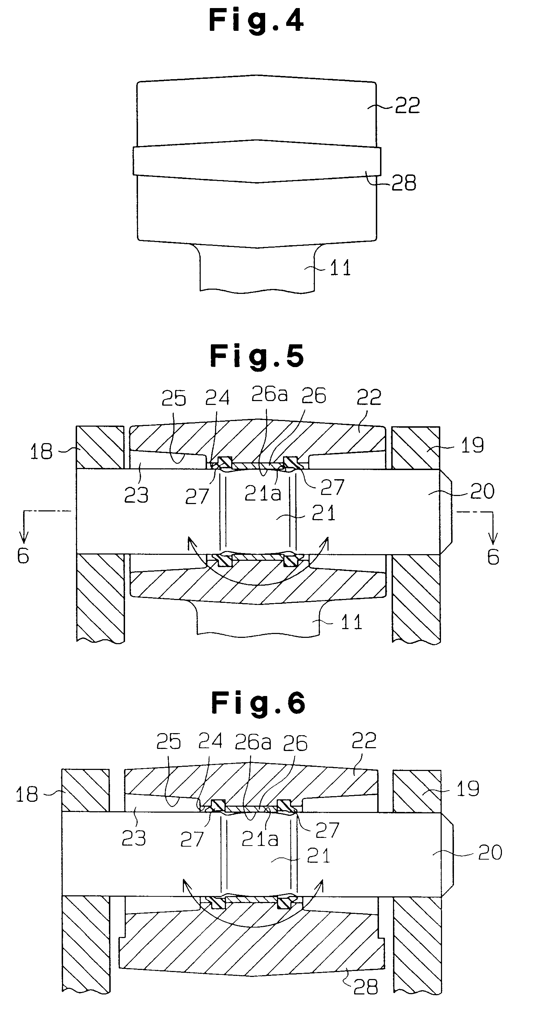

A tubular connecting portion, or coupler 22, is defined at the upper end of the damper anchor 11. Fig. 5 is a partial cross-sectional view taken along line 5-5 in Fig. 3 showing the coupler 22 and the connecting pin 20.

As shown in Figs. 5 and 6, a through hole, or support bore 23 extends through the coupler 22. The connecting pin 20 extends through the support bore 23. The support bore 23 has a midsection. The wall at the midsection defines a small diameter portion 24. A large diameter portion 25 is defined on each side of the small diameter portion 24. A sleeve bearing 26 is fit into the small diameter portion 24. The inner surface of the bearing 26 is an inner bearing surface 26a. A seal 27 is fitted on each side of the bearing 26 to prevent lubricating oil applied to the bearing surfaces 21a, 26a from leaking out of the small diameter portion 24. In the preferred embodiment, the seal 27 is made of synthetic rubber. Thus, the coupler 22 houses a multi-directional pivot joint. The joint is formed by the bearing 26 and the support portion 21.

As shown in Figs. 4 and 6, a projection, or a stopper 28, which serves as a restricting member, projects from the outer surface of the coupler 22. The stopper 28, which is integral with the coupler 22, extends in the axial direction of the support bore 23 with its ends projecting from both ends of the coupler 22 at one side of the coupler 22.

The coupler 22 is connected with the connecting pin 20 such that the sleeve bearing 26 is pivotal about the support portion 21 in multiple directions. Space exists between the outer bearing surface 21a and the inner bearing surface 26a. Furthermore, the coupler 22 is normally arranged such that space also exists between each projecting end of the stopper 28 and the associated support plate 18, 19. Accordingly, the damper 6 is permitted to pivot about an axis parallel to the projecting direction of the control valve 13 (as shown by the arrow in Fig. 5) and about the longitudinal direction of the damper 6 (as shown by the arrow in Fig. 6).

The structure for supporting the lower end of the damper 6, that is, the structure for coupling the distal end of the piston rod 9 to the rear axle bracket 10 is the came as the structure for coupling the upper end of the damper anchor 11 to the body frame bracket 12 except that the stopper 28 is eliminated.

The damper 6 is arranged such that the control valve 13 and the accumulator 16 project from the damper 6 in a direction perpendicular to the axes of the pins 20, as shown in Figs. 1 and 3. Therefore, in the preferred embodiment, the damper 6 is arranged such that the control valve 13 and the accumulator 16 project toward the right side of the forklift 1 from the damper 6 as viewed in Fig. 2.

The operation of the damper 6 will now be described. When the forklift 1 is not operating, the solenoid 15 is deexcited. In this state, the first and second passages P1, P2 are disconnected from each other thus locking the damper 6.

When commencing operation of the forklift 1, the solenoid 16 is excited. This connects the first and second passages P1, P2 with each other and unlocks the damper 6. In this state, the rear axle 3, on which the rear wheels 5 are mounted, is pivotal with respect to the body frame 2. When the damper 6 is unlocked, forces applied to the rear wheels 5 are absorbed by the damper 6 to stabilize the forklift 1.

If the forklift 1 lifts a heavy object to a high position, however, when the damper 6 is unlocked, the forklift 1 becomes unstable. In such case, the damper 6 must be locked to stabilize the forklift 1. Thus, the controller C de-excites the solenoid 15 to disconnect the first and second passages P1, P2 from each other and lock the damper 6. As a result, the rear axle 3 is locked to the body frame 2, which stabilizes the forklift 1.

The operation of the supporting structure for the damper 6 will now be described. During production of the forklift 1, the relative positions of the body frame 2 and the rear axle 3 may be offset from the ideal positions in the longitudinal direction of the vehicle due to dimensional differences between components or dimensional tolerances that are permitted during assembly. If the damper 6 is installed between the body frame bracket 10 and the rear axle frame bracket 12 in such state, the brackets 10, 12 support the damper 6 tilted such that the longitudinal axis of the damper 6 is not perpendicular to the axes of the pins 20, as shown in Fig. 1. If the relative positions of the body frame 2 and the rear axle 3 are offset from the ideal positions in the lateral direction of the vehicle, the damper 6 also tilts in the lateral direction such that the pins 20 are not both in the same vertical plane.

In such state, pivoting of the rear axle 3 relative to the body frame 2 causes the outer bearing surface 21a of the support portion 21 to slide against the inner bearing surface 26a of the bearing 26 between the body frame 2 and the damper 6. This pivots the coupler 22 such that the axis of its support bore 23 inclines with respect to the axis of the connecting pin 20.

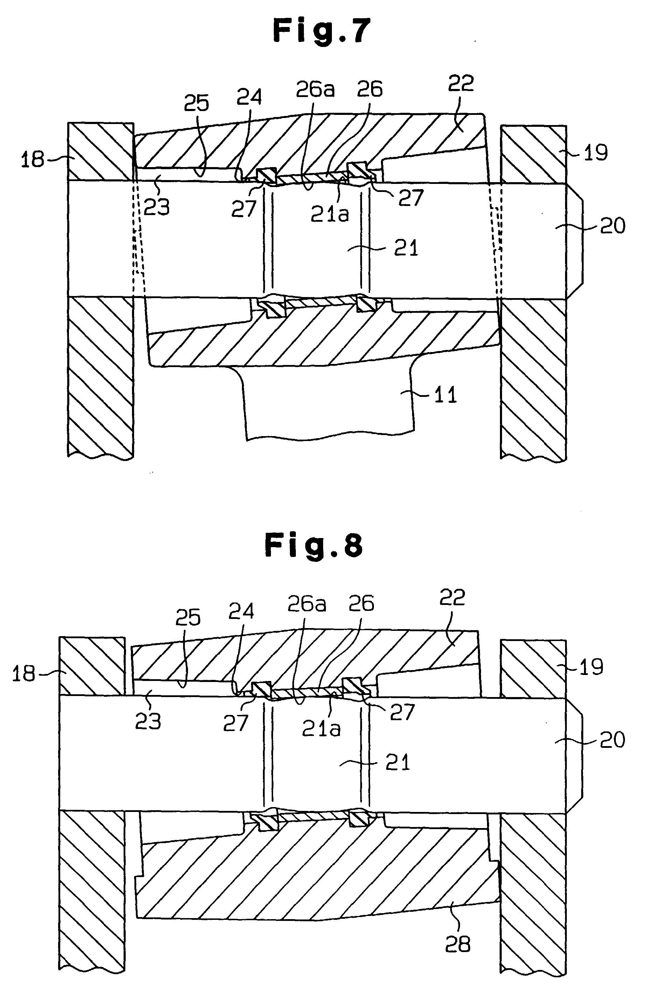

If the coupler 22 pivots about an axis parallel to the projecting direction of the control valve 13, the stopper 28 does not interfere with the movement of the coupler 22, as shown in Fig. 7. That is, the coupler 22 has a great amount of freedom to pivot in a plane that includes the axis of the bore 23 and the longitudinal axis of the damper 6.

The coupler 22 may also pivot about the longitudinal axis of the damper 6. However, the stopper 28 restricts such pivoting of the coupler 22, as shown in Fig. 8. For example, as shown in Fig. 8, when the coupler 22 pivots beyond a certain amount toward the support plate 19, the stopper 28 abuts against the support plate 19. Accordingly, pivoting of the coupler 22 about the longitudinal direction of the damper 6 is restricted by the stopper 28. This restricts the motion of the control valve 13 and the accumulator 16 in the longitudinal direction of the vehicle. Thus, the control valve 13 and the accumulator 16 do not hit other components.

In the preferred and illustrated embodiment, the outer bearing surface 21a of the support portion 21 and the bearing surface 26a of the bearing 26 slide against each other. This permits pivoting of the coupler 22. Thus, excessive force is not applied to the damper 6 even if the relative positions of the body frame 2 and the rear axle 3 are offset from their ideal positions in the longitudinal or lateral directions of the vehicle. Accordingly, misalignment of the body frame 2 with respect to the rear axle 3 does not damage the damper 6.

The stopper 28 of the coupler 22 restricts movement of the coupler 22 when it abuts against the support plates 18, 19. This restricts pivoting of the damper 6 about its axis and prevents components projecting from the damper 6 from swinging and hitting other components. Furthermore, pivoting of the coupler 22 in the plane that includes the axes of the bore 23 and the longitudinal axis of the damper 6 is not restricted by the stopper 28. That is, pivoting of the damper 6 in a plane that includes the axes of the two pins 20 is unrestricted by the stopper 28.

Pivoting of the damper 6 about its axis is restricted merely by fitting the coupler 22, from which the stopper 28 projects, on the connecting pin 20. This simplifies the structure for supporting the damper 6.

The stopper 28 is formed integrally with the coupler 22. In other words, the stopper 28 can be formed together with the coupler 22. Thus, the stopper 28 is produced easily.

The structure for coupling the piston rod 9 of the damper 6 to the rear axle bracket 10 is the same as the structure for coupling the anchor 11 of the damper 6 to the body frame bracket 12 except in that the stopper 28 is eliminated. Thus, the application of excessive force by the rear axle 3 to the damper 6 is also prevented. Accordingly, the damper 6 is not damaged by such excessive force.

It should be apparent to those skilled in the art that the present invention may be embodied in many other specific forms without departing from the spirit or scope of the invention. More particularly, the present invention may be embodied in the forms described below.

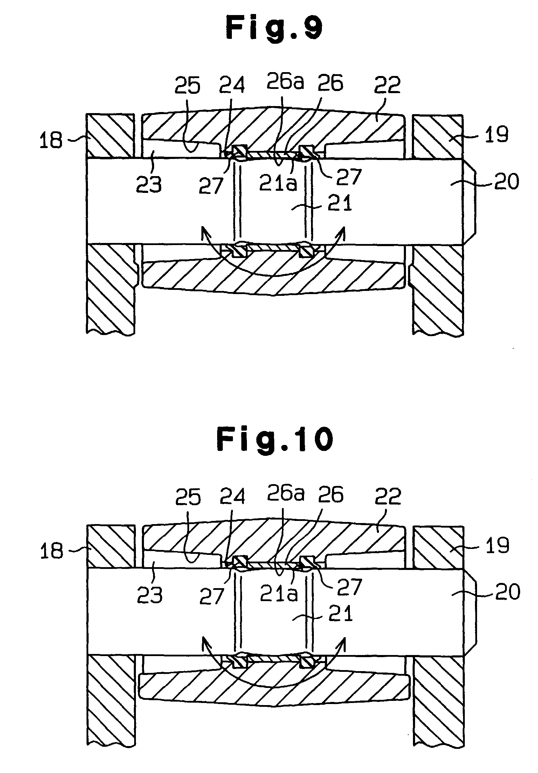

The stopper 28 is employed in the embodiment of Figs. 1 to 8 to restrict pivoting of the damper 6 about its axis. However, other structures may be employed in lieu of the stopper 28 as long as pivoting of the damper 6 about its axis is restricted. For example, as shown in Fig. 9, a projection 30 may be provided on each support plate 18, 19 at a position corresponding to one side of the coupler 22.

In the embodiment of Figs. 1 to 8, the stopper 28 includes projections extending from both ends of the coupler 22. However, this structure may be modified such that a projection extends from only one end of the coupler 22. This would still restrict the pivoting of the damper 6 about its axis.

As shown in Fig. 10, a stopper 32 may extend from the end surface of the large diameter portion 25 as well. This would also restrict the pivoting of the damper 6 about its axis.

The coupler 22 need not be formed integrally with the damper 6. The coupler 22 may be an independent body that is fastened to the anchor 11 of the damper 6. In this case, the pivoting amount of the damper 6 may easily be changed by replacing the coupler 22 with one having a different stopper 28.

The damper 6 need not be a multi-action hydraulic cylinder. For example, a single-action hydraulic cylinder may be employed as the damper 6. In this case, a damper must be installed on each side of the body frame 2 to acquire the advantages of the embodiment illustrated in Figs. 1 to 8. Furthermore, the damper 6 is not limited to hydraulic cylinders. Other types of fluid pressure cylinders may be employed. Gas pressure cylinders such as pneumatic cylinders may also be employed as the damper 6.

Application of the present invention is not limited to forklifts. The present invention may also be applied to other types of industrial vehicles such as shovel loaders.

The structure for coupling the damper 6 employed in the preferred and illustrated embodiment needs to be provided only between the damper 6 and the body frame bracket 12. A simple coupling structure may be employed to couple the rear axle side of the damper 6 to the rear axle 3. This would still restrict the pivoting of the damper 6 about its axis.

Therefore, the present examples and embodiments are to be considered as illustrative and not restrictive, and the invention is not to be limited to the details given herein, but may be modified within the scope and equivalence of the appended claims.

A structure for supporting a damper of an industrial vehicle. The damper (6) is supported by a multi-directional pivot joint (26, 21) such that excessive force is not applied to the joint (26, 21). The pivoting amount of the damper (6) about its longitudinal axis is restricted. The supporting structure includes a connecting pin (20) and a bearing (26). The connecting pin (20) is supported by a bracket (12), which is fixed to a body frame (2). The damper (6) includes a coupler (22), which houses the pivot joint (26, 21). A stopper (28) is provided on the outer surface of one side of the coupler (22) to restrict the pivoting amount of damper (6). The stopper (28) extends in the axial direction of the couple (22) and is formed integrally with the coupler (22).

## Claims

1. A supporting structure of a damper used in an apparatus for controlling the stability of a vehicle, the damper (6) having a longitudinal axis, wherein the damper is located between a vehicle frame (2) and an axle (3), the axle being supported to pivot in a vertical direction relative to the vehicle frame, the damper having a control mechanism (13, 16) projecting from a side surface of the damper for controlling pivoting of said axle, the structure characterized by:
a bracket (12) attached to one of the axle and the vehicle frame;
a connecting pin (20) connected with the bracket to extend in a longitudinal direction of the vehicle, the connecting pin having a supporting portion (21) provided with an outer bearing surface (21a);
a coupler (22) located at an end of the damper (6), the coupler having an inner bearing surface (26a) for contacting the outer bearing surface, wherein the inner bearing surface and the outer bearing surface form a multi-directional pivot joint; and
a projection (28, 30, 32) associated with one side of the coupler for restricting pivotal movement of the damper about its longitudinal axis.

2. A supporting structure as recited in claim 1, characterized in that the projection (28, 30, 32) is formed on one side of the coupler (22) and restricts the rotation of the coupler upon contact of the projection against the bracket.

3. A supporting structure as recited in claim 2, characterized in that the projection (28) is integrally molded with an outer surface of the coupler (22) to extend axially and project from at least one end of the coupler (22).

4. A supporting structure as recited in claim 2, characterized in that the projection (32) is integrally molded with the coupler (22) to project from at least one end of the coupler (22).

5. A supporting structure as recited in claim 1, characterized in that the projection (30) extends from the bracket (12), and that the projection is located opposite to an end of the coupler (22) and restricts the rotation of the coupler upon contact of the projection against the end of the coupler, thereby restricting the rotation of the damper (6) about its longitudinal axis.

6. A supporting structure as recited in any one of claims 1 to 5, characterized in that the coupler (22) is formed substantially in a tubular form having a though hole (23) into which the connecting pin (20) is inserted, that the through hole has a small diameter midsection (24) and large diameter end-sections (25), and that the inner bearing surface is fitted in the small diameter midsection (24).

7. A supporting structure as recited in claim 6, characterized in that the multi-directional pivot joint is lubricated, and that seal members (27) seal both ends of the small diameter midsection (24) for preventing leakage of the lubricant.

8. A supporting structure as recited in calm 7 characterized in that the seal members (27) are formed with synthetic rubber.

9. A supporting structure as recited in any one of claims 1 to 8, characterized in that the control mechanism (13, 16) extends from said damper (6) in a lateral direction of the vehicle, and that the motion of the control mechanism in the longitudinal direction of the vehicle is restricted when the projection (28, 30, 32) restricts the rotation of the damper (6).

10. A supporting structure as recited in any one of claims 1 to 9, characterized in that the control mechanism includes an electromagnetic control valve (13) and an accumulator (16).
